# EUROPEAN PATENT SPECIFICATION

(11) **EP 4 136 484 B1**
(45) Date of publication and mention of the grant of the patent: **18.12.2024**
(21) Application number: 21718877.0
(22) Date of filing: 15.04.2021
(51) Int. Cl.: G02B 3/00, G02B 1/14, B29D 11/00, G02C 7/02

(54) **LENS WITH SURFACE MICROSTRUCTURES ENCAPSULATED BY A THICK LOW REFRACTIVE INDEX HARD COAT**
LINSE MIT OBERFLÄCHENMIKROSTRUKTUREN, DIE MIT EINER DICKEN HARTSCHICHT MIT NIEDRIGEM BRECHUNGSINDEX EINGEKAPSELT SIND
LENTILLE À MICROSTRUCTURES DE SURFACE ENCAPSULÉES PAR UN REVÊTEMENT DUR ÉPAIS À FAIBLE INDICE DE RÉFRACTION

(30) Priority: 17.04.2020 EP 20315189
(43) Date of publication of application: 22.02.2023
(73) Proprietor: Essilor International, 94220 Charenton-Le-Pont (FR)
(72) Inventor: BITEAU, John, DALLAS, Texas TX 75235 (US); JIANG, Peiqi, DALLAS, TEXAS 75234 (US)
(74) Representative: Plasseraud IP
(86) International application number: PCT/EP2021/059725
(87) International publication number: WO 2021/209527

(56) References cited:
- EP-A1- 3 273 292
- WO-A1-2020/067028
- US-A1- 2009 291 206
- US-A1- 2011 040 377

## Description

### FIELD OF THE INVENTION

The invention relates to an optical article comprising a base lens substrate having at least one optical element or a plurality of optical elements such as microlenses, a Fresnel structures, etc protruding from a surface thereof, and the method for forming such optical articles.

### BACKGROUND OF THE INVENTION

Optical articles such as lenses generally comprise a base-lens substrate which is shaped in order to provide a desired optical power, and an anti-abrasion coating covering at least one surface of the base-lens substrate to prevent the latter from being damaged by scratches.

An anti-abrasion coating, also known as hard coating, provides, according to a favorite embodiment with a bi-layered structure, a hardness gradient from the base-lens substrate to the free surface of the anti-abrasion coating. The upper layer of the coating defines the hardest part of the coating at the free surface thereof and allows a protection against thin particles and thin scratches, while the lower layer of the coating defines the less hard part underneath can absorb shocks provided by bigger particles and prevent formation of larger scratches. It also provides a transition with the hardness of the base-lens substrate to prevent formation of cracks at the interface between the substrate and the abrasion-resistant coating.

For a number of applications, it has been found desirable to provide on the base-lens substrate a plurality of optical elements, such as microlenses, providing a local change of the power of the optical article. For instance, it is known from US 2017/0131567 a lens comprising a plurality of microlenses formed on a surface of the lens, the local change of power provided by the microlenses enabling to suppress or slow down the progress of myopia.

It is also known from document WO2016/168746 a lens having a first optical power, the lens comprising an array of microlenses having a second optical power, the microlenses allowing to increase the correction provided by the lens even though the curvature of the lens is limited, or allowing forming multifocal lenses with large areas of different optical powers while not exhibiting sharp steps that are visible at a micro-scale. US2009291206 is also cited as another example of the prior art.

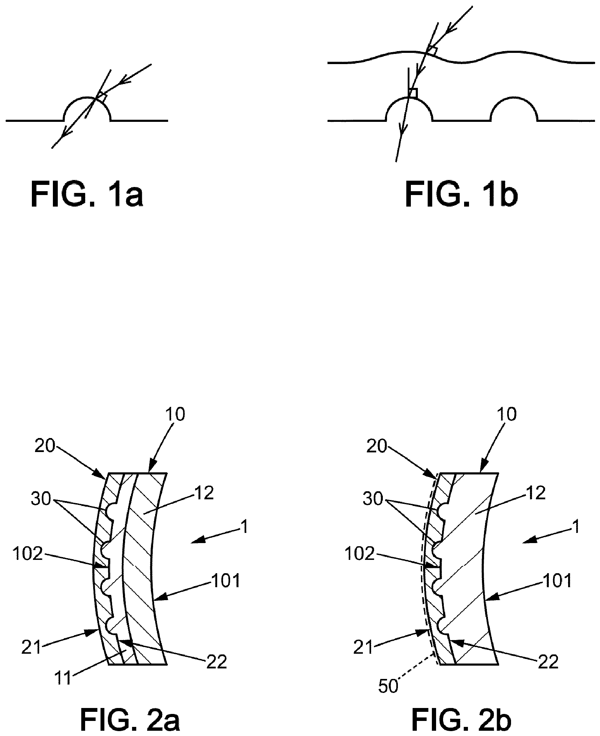

With reference to figures 1a and 1b, the covering of a lens having microlenses with an abrasion-resistant coating changes the power of the microlenses and therefore reduces or impairs the effect provided by the microlenses. Indeed, the thickness of a microlens is usually of about 1 µm to 2µm while the typical thickness of an abrasion-resistant coating is of about 3 µm. Thus, when a surface comprising protruding elements such as microlenses is covered by abrasion-resistant coating (typically applied by dipping), the free surface of the abrasion-resistant coating is not exactly of the same curvature than that of the lens it covers. Instead, the presence of the protruding elements causes said free surface to exhibit local deformations of the surface.

As shown on figure 1b, a ray of light incident on one such deformation undergoes a first refraction when entering into the abrasion-resistant coating, and a second refraction at the interface with the microlens of the base-lens substrate, and therefore the path of the ray of light is changed as compared to its path if there was no abrasion-resistant coating (figure 1a).

A solution has been proposed consisting of reducing the thickness of the abrasion-resistant coating to reduce this alteration of the microlenses power. However, it has been measured that there still remains an alteration of the power since the local power P' of the microlenses covered with this coating is about P-0,5 (P being the initial power of the microlenses without coating). Furthermore, the properties of protection against scratching of the coating are highly reduced, so this solution is not satisfactory.

The same kind or problem arises for other optical structures present on a base-lens substrate. For instance, structures such as Fresnel rings also undergo a perturbation of power when covered by an abrasion-resistant coating.

### SUMMARY OF THE INVENTION

The purpose of the invention is to provide a solution to the defects in the prior art.

In particular, one aim of the invention is to provide an optical article comprising a base-lens substrate, an abrasion-resistant coating protecting said substrate, and at least one optical element (such as microlens) or a plurality of optical elements, wherein the abrasion-resistant coating does not reduce or suppress the optical effect of the optical element and ensures a good abrasion resistance thanks to its smooth surface, contrary to the prior art when the abrasion resistant coating somewhat reproduces the surface microstructure.

The above-mentioned purpose is achieved by a combination of the characteristics described in the independent claims, and the subordinate claims provide specific advantageous examples of the invention.

### An optical article and a method of manufacturing the same are disclosed

Thus, in one embodiment, an optical article is disclosed, the article comprising:
- a base lens substrate having opposing first and second lens surfaces;
- a protective layer having opposing first and second protective surfaces and a maximum thickness, measured in a direction perpendicular to the first protective surface between the first and second protective surfaces, the first protective surface disposed on the second lens surface; and
- at least one or a plurality of optical elements, each:
   defining a portion of one of the first protective surface and the second lens surface;
   having a maximum height, measured in a direction perpendicular to the second lens surface carrying them, that is less than or equal to 0.1 millimeters (mm) and a diameter that is less than or equal to 2.0 mm.
   wherein
- the protective layer is composed of a crosslinked matrix and nanoparticles and
- the index n_{c} of said protective layer is lower than the index nₘ of the optical elements such that the difference nₘ - n_{c} is greater than 0.09, preferably greater than 0.10, or even greater than 0.15; and
   wherein
- the maximum thickness of the protective layer is at least 2 times, preferably 5 times of the maximum height of the at least one optical element or each of the optical elements.

The protective layer has the role of protecting the base lens substrate from scratches and abrasion. It is also conventionally called abrasion-resistant coating or Hard-Coating (HC).

In another embodiment, a method of manufacturing an optical article is disclosed, the method comprising:
1) providing a base lens substrate having opposing first and second lens surfaces and
   comprising, on the second lens surface, at least one or a plurality of optical elements having a maximum height, measured in a direction perpendicular to the second lens surface, that is less than or equal to 0.1 millimeters (mm) and a diameter that is less than or equal to 2.0 mm;
2) applying by wet deposition on the second lens surface of the base lens substrate comprising the at least one or the plurality of optical elements, a curable composition suitable for forming a protective layer having opposing first and second protective surfaces;
3) curing the curable composition for forming the protective layer;
4) optionally repeating step 2 or step 2 and step 3;

the protective layer resulting from step 3 or 4 presenting a second protective surface parallel to the second lens surface of the lens devoid of optical elements,
said protective layer encapsulating the at least one optical element or each optical elements,
the maximum thickness of the protective layer being at least 2 times, preferably at least 5 times of the maximum height of the or each of the optical element and
the index n_{c} of said protective layer being lower than the index nₘ of the optical elements such that the difference nₘ - n_{c} is greater than 0.09, preferably greater than 0.10, or even greater than 0.15.

The optical article of the present disclosure comprises a protective layer acting as an abrasion-resistant coating as thick as it enables to encapsulate each optical element (such as a microlens).

The free surface of the protective layer (i.e the second protective layer) is exactly the same as that of the surface of the base lens substrate it covers (i.e second lens surface of the lens devoid of optical elements), and has the same base curve. In other words, the protective layer exhibits the same base curve as the base curve of the second lens surface of the base lens substrate devoid the optical elements. The protective layer comprises a smooth free surface (i.e a smooth second protective layer). The second protective layer of the protective layer does not replicate the height change present at the first protective surface. As a consequence, the shape of each optical element and its optical power are not impaired by the coating, and therefore the detrimental effects disclosed before related to the deposition of the coating do not happen. Furthermore the protective layer shows a good abrasion resistance thanks to the smooth surface, contrary to the prior art when the abrasion resistant coating somewhat reproduces the surface microstructure

The smooth free surface of the protective layer is also particularly advantageous for subsequent deposition of other functional coatings such as antireflective, anti-soiling, or anti-fogging coatings, aesthetic and comfort.

In one embodiment of the present invention, the materials forming respectively the protective layer and the optical element are selected to provide a gap of index of refraction of at least 0.1, the protective layer material having an index of refraction lower than the index of refraction of the material forming the optical element. This index gap allows to obtain the desired optical power for the optical element while having a physical height which is relevant for the various technologies used by the man of the art to produce optical elements on a lens surface, while not needing optical elements too high to make them aesthetically unpleasant.

Unless otherwise specified, the refractive indexes in the present invention are expressed at 25°C at a wavelength of 589 nm.

### DESCRIPTION OF THE DRAWINGS

For a more complete understanding of the description provided herein and the advantages thereof, reference is now made to the brief descriptions below, taken in connection with the accompanying drawings and detailed description, wherein like reference represent like parts.
Figures 1a and 1b, which have already been described, depicts the impact of a protective layer covering a substrate comprising optical elements (microlenses) on the path of an incoming ray of light.
Figures 2a and 2b schematically show examples of the optical article of the present invention.
Figure 3 schematically shows the spin coating or spray coating step of the method for manufacturing an optical article according to an embodiment.
Figure 4 schematically shows the rod mayer coating step of the method for manufacturing an optical article according to an embodiment.
Figure 5 also relates to the rod mayer coating step of the method for manufacturing an optical article according to an embodiment.
Figure 6 schematically shows the inkjet coating step of the method for manufacturing an optical article according to an embodiment

### DETAILED DESCRIPTION

### Optical article comprising optical elements

The optical article according to the invention will now be described.

The optical article comprises
- a base lens substrate having opposing first and second lens surfaces,
- a protective layer having opposing first and second protective surfaces, the first protective surface disposed on the second lens surface and
- at least one or a plurality of optical elements, each defining a portion of one of the first protective surface and the second lens surface.

### The base lens substrate

The base lens substrate 10 may comprise a single layer or may be formed of a laminate. The base lens substrate 10 preferably comprises at least a plano wafer 11, or a base lens 12 providing optical power, or both, i.e. a base lens 12 providing optical power and a wafer 11 complementing the base lens 12 with an optical function as described below. In the example shown in figure 2a, the base-lens substrate 10 comprises a plano wafer 11 and a base lens 12. In the example shown in figure 2b, the base lens substrate 10 only comprises a base lens 12.

A plano wafer 11 has no optical power and hence provides no correction to the wearer, but acts as a mechanical support for other layers, and optionally also provides one or more functional properties to the finished optical article, such as at least one among the following optical functions:
- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

A plano wafer 11 refers to a film structure formed by either a single film layer or a film laminate structure formed of multiple film layers attached to one another. More precisely, the plano wafer 11 may be formed by one or several ophthalmic-grade function film (with for example polar or photochromic properties), optionally having an ophthalmic-grade protective film on one or both sides of the ophthalmic grade functional film.

A plano wafer 11 may exhibit a thickness in the range of 20 to 700 micrometers, preferably 30 to 600 µm. The protective layer(s), if any, may have a thickness of about 50 µm.

Suitable transparent resin film or sheet materials for forming the plano wafer (including functional and protective films) include poly(vinyl alcohol) (PVA) or cellulose acylate-based materials, for example, cellulose diacetate and cellulose triacetate (TAC). Other usable wafer materials can include polycarbonate, polysulfone, cellulose acetate butyrate (CAB) or cyclic oleofin copolymer (COC), polyacrylate, polyester, polystyrene, copolymers of acrylate and styrene, and poly(vinylalcohol) (PVA). Polycarbonate-based materials include, for example, polybisphenol-A carbonate; homopolycarbonate such as 1,1' dihroxydiphenyl-phenylmethylmethane, 1,1'-dihroxydiphenyl-diphenylmethane, 1,1'-dihydroxy-3,3'-dimethyl diphenyl-2,2-propane, their mutual copolymer polycarbonate and copolymer polycarbonate with bisphenol-A.

The base lens 12 may be formed in optic plastic, for example made of thermoplastic or thermosetting plastic. In particular, thermoplastic materials may be selected from, for instance: polyamides, polyimide, polysulfones, polycarbonates and copolymers thereof, poly(ethylene terephtalate) and polymethylmethacrylate (PMMA).

Thermosetting materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39^{®}) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof. As used herein, a (co)polymer is intended to mean a copolymer or a polymer. As used herein, a (meth)acrylate is intended to mean an acrylate or a methacrylate.

Examples of substrates to be suitably used in the present invention include those obtained from MR6^{®}, MR7^{®}, MR8^{®}, MR174 ^{®} and MR10^{®} resins (thermosetting polythiourethane resins). The various substrates based on polythiourethane resins are marketed by the Mitsui Toatsu Chemicals Company and these substrates as well as the monomers used for their preparation are especially described in the patents U.S. Pat. No. 4,689,387, U.S. Pat. No. 4,775,733, U.S. Pat. No. 5,059,673, U.S. Pat. No. 5,087,758 and U.S. Pat. No. 5,191,055.

The base lens substrate 10 or the base lens 12 can advantageously be made in an optical plastic, preferably a thermoplastic or thermosetting plastic selected from, for instance: polycarbonate, of polyamide, of polyimide, of polysulfone, of copolymers of poly(ethylene terephthalate) and polycarbonate, of polyolefins, in particular of polynorbornene, of homopolymers and copolymers of diethylene glycol bis(allyl carbonate), of (meth)acrylic polymers and copolymers, in particular (meth)acrylic polymers and copolymers derived from bisphenol A, of thio(meth)acrylic polymers and copolymers, of polyurethane and polythiourethane homopolymers or copolymers, epoxy polymers and copolymers and episulfide polymers and copolymers, preferably made of polycarbonate, diethylene glycol bis(allylcarbonate) polymer, or of a thermosetting polythiourethane resin having a refractive index of 1.60 or a thermosetting polythiourethane resin having a refractive index of 1.67, more preferably made of polycarbonate.

For example, it will be possible to use polycarbonate, such as Lexan OQ3820^{®}, in particular with a refractive index of 1.586, sold by Sabic, a diethylene glycol bis(allyl carbonate), such as CR39^{®}, in particular with a refractive index of 1.5, sold by PPG Industries, or else a polythiourethane, such as MR7^{®}, in particular with a refractive index of 1.66, sold by Mitsui Toatsu.

The base lens 12 is preferably shaped to provide optical power suitable for correcting a wearer ametropia, for instance myopia or hyperopia. The base lens 12 may be a finished lens, a monofocal or multifocal lens such as a multifocal progressive lens.

The base substrate 10 may comprise other layers in addition to the base lens 12 and/or plano wafer 11, such as for instance photochromic trans-bonding^{®} layer on a front surface of a base lens 12, or any additional layer which can be deposited on the base lens or plano wafer and which incorporates an optical function such that:
- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

The base lens 12 may also be a semi-finished lens which means that it does not provide the final power, also called target power, of the lens that is to be manufactured from the semi-finished lens. It may provide a power which is not the target power, said target power being obtained by later surfacing of the semi-finished lens.

The base lens 12 may also be a lens which is not trimmed, which means that its peripheral shape has not been adjusted to the shape of a frame in which it will then be inserted.

As shown in figures 2a and 2b, the base lens substrate 10 comprises two opposing first and second lens surfaces, two opposite main surfaces comprising a back surface 101 and a front surface 102. In the example of figure 2a, the front surface 102 of the base lens substrate 10 is formed by a front surface of a plano wafer 11, whereas in the example of figure 2b, the front-surface 102 of the base lens surface 10 is formed by a front surface of a lens 12.

### The optical elements or plurality of optical elements

The optical article 1 further comprises at least one optical element 30 or a plurality of optical elements having opposing first and second protective surfaces, and defining the first protective surface disposed on the second lens surface, for example protruding from one of the main surfaces of the base lens substrate 10. In preferred embodiments, each optical element 30 protrudes from the front surface 102 of the base-lens substrate 10.

By "protruding" is meant that each optical element projects from the surface of the base lens substrate 10, outwardly, i.e. away from said substrate. Each optical element is therefore convex.

In one embodiment, each optical element 30 is formed of the same material as the base lens substrate 10 and may be formed integral with the latter. If the base lens substrate 10 is a laminate, each optical element 30 may be formed of the same material that the layer from which is protrudes.

In one embodiment each optical element 30 is formed of the same material as the base lens substrate 10 and said material is for example chosen among the thermoplastic or thermosetting optical plastic such as polycarbonate, of polyamide, of polyimide, of polysulfone, of copolymers of poly(ethylene terephthalate) and polycarbonate, of polyolefins, in particular of polynorbornene, of homopolymers and copolymers of diethylene glycol bis(allyl carbonate), of (meth)acrylic polymers and copolymers, in particular (meth)acrylic polymers and copolymers derived from bisphenol A, of thio(meth)acrylic polymers and copolymers, of polyurethane and polythiourethane homopolymers or copolymers, epoxy polymers and copolymers and episulfide polymers and copolymers, preferably made of polycarbonate, diethylene glycol bis(allylcarbonate) polymer, or of a thermosetting polythiourethane resin having a refractive index of 1.60 or a thermosetting polythiourethane resin having a refractive index of 1.67, more preferably made of polycarbonate.

In what follows, an optical element is a discrete optical element of microscopic scale, inducing a local change in optical power of the optical device.

In one embodiment, the optical elements are configured so that at least along one section of the lens the mean sphere of the optical elements increases from a point of said section towards the peripheral of said section.

According to an embodiment the optical elements are configured so that at least along one section of the lens, for example at least the same section as the one along which the mean sphere of the optical elements increases, the mean cylinder increases from a point of said section, for example the same point as for the mean sphere, towards the peripheral part of said section.

According to an embodiment the optical elements or plurality of optical elements are microlenses. A microlens may be spherical, toric, or have an aspherical shape. A microlens may have a single focus point, or cylindrical power, or non-focusing point. In preferred embodiments, microlenses can be used to prevent progression of myopia or hyperopia. In that case, the base lens substrate comprises a base lens 12 providing an optical power for correcting myopia or hyperopia, and the microlenses may provide respectively an optical power greater than the optical power of the base lens 12 if the wearer has myopia, or an optical power lower than the optical power of the base lens 12 if the wearer has hyperopia.

In the sense of the present disclosure, a "microlens" has a contour shape being inscribable in a circle having a diameter greater than or equal to 0.8 mm and smaller than or equal to 3.0 mm.

For example, the microlenses may be regularly distributed along circles centered on the optical center of the refraction area.

The mean cylinder of the different micro lenses may be adjusted based on the shape of the retina of the person.

The refraction area may comprise a far vision reference point, a near vision reference, and a meridian line joining the far and near vision reference points. For example, the refraction area may comprise a progressive additional lens design adapted to the prescription of the person or adapted to slow down the progression of the abnormal refraction of the eye of the person wearing the lens element.

The meridian line corresponds to the locus of the intersection of the main gaze direction with the surface of the lens.

Preferably, according to such embodiment, the microlenses are configured so that in standard wearing conditions along any horizontal section of the lens, when worn by a wearer, the mean sphere and/or the mean cylinder of the microlenses increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one of the microlenses, has an optical function of not focusing an image on the retina of the eye of the person when the lens element is worn in standard wearing conditions.

Advantageously, such optical function of the microlens combined with a refractive area having at least one refractive power different from the refractive power of the prescription allows slowing down the progression of the abnormal refraction of the eye of the person wearing the lens element.

The microlenses may be non-contiguous.

In the sense of the present disclosure two microlenses are non-contiguous if for all the paths linking the two microlenses one may measure at least along part of each path the refractive power based on a prescription for the eye of the person.

When the two microlenses are on a spherical surface, the two microlenses are non-contiguous if for all the paths linking the two optical elements one may measure at least along part of each path the curvature of said spherical surface.

According to an embodiment, at least one of the microlenses has an optical function of focusing an image on a position other than the retina.

Preferably, at least 50%, for example at least 80%, for example all, of the microlenses have an optical function of focusing an image on a position other than the retina.

According to an embodiment, at least one of the microlenses has a non-spherical optical function.

Preferably at least 50%, for example at least 80%, for example all, of the microlenses have a non-spherical optical function.

In the sense of the present disclosure, a "non-spherical optical function" is to be understood as not having a single focus point.

The at least one microlens having a non-spherical optical function is transparent.

One can add these microlenses on a defined array like circle, square or hexagonal or random or other.

The microlenses may cover specific zones of the lens element, like at the center or any other area.

The optical element density or the quantity of power may be adjusted depending on zones of the base lens substrate. Typically, the microlenses may be positioned in the periphery of the base lens substrate, in order to increase the effect of the optical element on myopia control, so as to compensate peripheral defocus due to the peripheral shape of the retina for example.

According to an embodiment, at least one, for example all, of the microlenses has a shape configured so as to create a caustic in front of the retina of the eye of the person. In other words, such microlens is configured so that every section plan where the light flux going through said microlens is concentrated if any, is located in front of the retina of the eye of the person, either in a punctual way in a plan or never in a punctual manner in none of those section plan.

According to an embodiment, the at least one, for example all, of the microlenses having a non-spherical optical function is a multifocal refractive micro-lens.

In the sense of the present disclosure, a microlens being a "multifocal refractive microlens" includes bifocals (with two focal powers), trifocals (with three focal powers), progressive addition lenses, with continuously varying focal power, for example aspherical progressive surface lenses.

According to an embodiment, the at least one multifocal refractive micro-lens has a toric surface. A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment, the at least one of the microlenses having a non-spherical optical function, for example all, of the optical elements is a toric refractive micro-lens. For example, a toric refractive micro-lens with a sphere power value greater than or equal to 0 diopter (δ) and smaller than or equal to +5 diopters (δ), and cylinder power value greater than or equal to 0.25 Diopter (δ).

As a specific embodiment, the toric refractive microlens may be a pure cylinder, meaning that minimum meridian line power is zero, while maximum meridian line power is strictly positive, for instance less than 5 Diopters.

According to an embodiment, at least one, for example all of the microlenses, has an optical function with high order optical aberrations. For example, the microlens is composed of continuous surfaces defined by Zernike polynomials.

The optical elements of the present invention, typically the microlenses, have a maximum height, measured in a direction perpendicular to the second lens surface carrying them, that is less than or equal to 0.1 millimeters (mm), preferably comprised between 2 and 20 micrometers (µm) and a diameter that is less than or equal to 2.0 mm, comprised between 0.8 and 2.0 millimeter (mm).

Back to figures 2a and 2b, one can notice that the surface of the base-lens substrate carrying the microlenses 30, typically the front surface 102, is convex and is formed by two kinds of outer surfaces: a first one is the outer surface of each optical element, comprising local curvature variations due to the shape of the microlenses, whereas the second one is the surface of the base lens substrate disposed between the microlenses, which exhibits fewer or even no local curvature variations. Preferably, the difference induced by a local curvature variation of a microlens compared to the surrounding second kind of surface is at least 1 D.

The base lens substrate therefore exhibits a thickness in average greater at the microlens than away from them, and the maximum thickness of the substrate is reached at the point of maximum thickness of the microlenses.

According to another embodiment the at least one optical element or plurality of optical elements are Fresnel structures, diffractive structures such as microlenses defining each a Fresnel structure, permanent technical bumps or phase-shifting elements. It can also be a refractive optical element such as microprisms and a light-diffusing optical element such as small protuberances or cavities, or any type of element generating roughness on the substrate.

### The protective layer:

The protective layer having the role of protecting the base lens substrate 10 from scratches and abrasion fully encapsulates the optical elements. The protective layer has a maximum thickness, measured in a direction perpendicular to the first protective surface between the first and second protective surfaces, of at least 2 times, preferably at least 5 times of the maximum height of each of the optical elements.

The maximum thickness of the protective layer in the present invention is measured in a direction perpendicular to the first protective surface between the first and second protective surfaces. Such thickness corresponds to the highest thickness in any point at the surface. It does not correspond to the thickness above the optical elements, but to the total thickness (including the height of the the optical elements) since the protective layer is also present between the optical elements.

Typically the maximum thickness of the protective layer can be less than or equal to or between any two of 200 micrometers (µm), 150 µm, 100 µm, 90 µm, 80 µm, 70 µm, 60 µm, 50 µm, 40 µm, 30 µm, 20 µm, 10 µm or smaller while being at least 2 times, preferably at least 5 times, for example between 2.5 to 12 times or between 2.5 to 8 times greater than the maximum height of the optical element or the plurality of optical elements.

Furthermore, the minimum thickness of the protective layer is measured at the optical elements, and more specifically at the point of maximal height of the optical elements. At this point the minimum thickness of the protective layer, measured at the point of maximal height of the optical elements and from that point, may be inferior or equal to the height of the optical elements at that point, and inferior or equal to a height of 10 µm, whichever is the highest, preferably inferior or equal two-third or even half the optical element height, preferably inferior or equal to 2 µm, for instance comprised between 1 and 5 µm.

In a particular embodiment, the protective layer 20 covers the surface of the base lens substrate 10 from which each optical element (typically a microlens) 30 protrudes, such that each optical element is fully encapsulated by the protective layer 20. The protective layer 20 therefore has a first protective surface 22 in contact with the base lens substrate 10 and each optical element protruding thereof, and a second protective surface 21, opposite the first.

In embodiments, and as shown in figures 2a and 2b, the protective layer 30 covers the front surface or second lens surface 102 of the base lens-substrate. In that case, the interface between the protective layer 20 and the base lens substrate 10 is thus formed by a back surface or first protective surface 22 of the protective layer 20 and the front surface or second lens surface 102 of the base lens substrate.

In one embodiment, the surface of the protective layer at the interface with the base lens substrate is concave. On the other hand, the second protective surface of the protective layer 21, which is the free surface of the protective layer 20, is convex and smooth, and exhibits the same base curve as the base curve of the surface of the base lens substrate 10, the second lens surface devoid of optical elements, in particularly thanks to the manufacturing method of the protective layer, as will be disclosed in more details below.

Moreover, the indices of refraction of the material forming the microlens(es) 30 and of the material forming the abrasion-resistant coating 20 are different in order to allow the change of local power incurred by the microlenses to occur.

The index of refraction n_{c} of the material forming the protective layer is lower than the index of refraction nₘ of the material forming the microlenses.

More precisely the index n_{c} of said protective layer is lower than the index nₘ of the optical elements such that the difference nₘ - n_{c} is greater than 0.09, preferably greater than 0.10, or even greater than 0.15.

The index n_{c} of the material forming the protective layer is lower than the index nₘ such that the difference nₘ - n_{c} is greater than 0.09, preferably greater than 0.1, 0.3, or even greater than 0.5. Indeed, for an optical element such as microlens of a given diameter and a given desired optical power, the addition of an abrasion-resistant coating tends to increase the maximum height of the optical elements which is required to achieve said optical power. On the other hand, the more important the difference in refractive index between the material forming the abrasion-resistant coating and the material forming the optical element, the lower is said needed maximum height, and in turn the easier is the base-lens substrate and its microlenses to manufacture.

The protective layer can be any layer conventionally used as abrasion-resistant coating in the field of ophthalmic lenses provided preferably that the curable composition for forming said protective layer can be applied by wet deposition on the optical elements to be coated.

The protective layer is typically composed of a crosslinked matrix and nanoparticles. In other words, the protective layer consists in a nanocomposite material.

The crosslinked matrix of the present invention or cured matrix is for example made of acrylic compounds, epoxy compounds, epoxy acrylic compounds, silane compounds, epoxysilane compounds, polyurethane acrylic compounds, siloxane compounds and any mixture of the aforesaid compounds.

The protective coating of the present invention contains particles, more precisely nanoparticles, chosen so as to reduce its refractive index. The nanoparticles useful for the present invention show a diameter less than 70 nm, preferably less than 50 nm, and even preferably less than 30 nm, are well dispersed in the matrix, and present a surface chemically compatible with the crosslinked matrix, preferably presenting a chemical reaction between the surface of the nanoparticles and the compounds used for forming the matrix.

The nanoparticles useful for the present invention are typically chosen from silica nanoparticles (Si0₂) having a refractive index ranging from 1.0 to 1.5, for example hollow silica nanoparticles having a refractive index ranging from 1.04 to 1.4, functionalized or surface modified silica nanoparticles, functionalized or surface modified hollow nanoparticles and a mixture thereof.

For example, silica particles of index ranging from 1.4 to 1.5 (such as Nanocryl C-150 (50% nanosilica dispersed in trimethylol propane triacrylate - TMPTA) can be used to reduce the index of the protective layer of natural refractive index of about 1.49.

Other non-limiting examples of commercially available surface treated Si0₂ dispersed particles in solvent or monomer include Nanocryl^{®} C-140 (50% Si0₂ in 50% hexandioldiacrylate), Nanocryl^{®} C-165 (50% Si0₂ in 50% alkoxylated pentaerythritol tetraacrylate) from Evonik Industries, Inc. (Germany), and IPA-AC-2101 (30 wt% Si0₂ dispersed in 70 wt.% isopropyl alcohol and PM-AC-2101 (30 wt% Si0₂, dispersed in 70 wt.% 1-methoxy-2-propanol from Nissan Chemical America (Pasadena, TX, USA).

The use of hollow nanoparticles such as hollow silica nanoparticles, which are known to have an index ranging from 1.04 to 1.4 depending on the manufacturing process enable to even further reduce the refractive index of the hard coat while maintaining the abrasion resistance properties; an example of compatible hollow silica nanoparticles could be Thrulya, colloidal hollow silica nanoparticles produced by JGC C&C. Alternatively, silica and hollow silica nanoparticles may be used in combination. Thus, hard coatings, protective layers of refractive index below 1.5, preferably 1.4 may be reached.

Hard abrasion-resistant and/or scratch-resistant coatings are preferably prepared from curable or crosslinkable compositions comprising at least one alkoxysilane and/or one hydrolyzate of the latter obtained, for example, by hydrolysis with a hydrochloric acid solution. After the hydrolysis stage, the duration of which is generally between 2 h and 24 h, preferably between 2 h and 6 h, catalysts can optionally be added. A surface-active compound is preferably also added in order to promote the optical quality of the deposit.

Mention may be made, among the curable composition coatings recommended in the present invention, of coatings compositions based on epoxysilane hydrolyzates, such as those described in the patents EP 0 614 957, US 4 211 823 and US 5 015 523.

The curable coating composition suitable for forming the protective coating may also be formed of a cross-linkable thermosetting material, or composite material

Curable compositions of materials suitable for forming abrasion resistant coating may be found in document US2007238804.

A preferred composition for the protective coating of the present invention is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferentially, the hydrolyzate used is a γ-glycidoxypropyltrimethoxysilane (GLYMO) and dimethyldiethoxysilane (DMDES) hydrolyzate or else a γ-glycidoxypropyltrimethoxysilane (GLYMO) and triethyl orthosilicate (TEOS) hydrolyzate.

Another preferred composition for forming the protective coating of the present invention comprises polyfunctional acrylate monomers such as 1,6-hexanedioldiacrylate and dipentaerythritol hexaacrylate or a mixture thereof, silane compounds such as vinylalkoxysilane, for example vinyltrimethoxysilane, polyfunctional epoxy compounds such as trimethylolpropanetriglycidyl ether, silica nanoparticles, free radical photo-initiator or one cationic photoinitiator or a mixture thereof and surfactants such as silicone hexa-acrylate material and fluorocarbon-modified polysiloxane or a mixture thereof.

Still another preferred composition for forming the protective coating of the present invention comprises polyfunctional acrylate monomers such as 1,6-hexanedioldiacrylate, silica nanoparticles such as hollow silica nanoparticles, for example surface modified hollow silica nanoparticles, and a catalyst such as free radical photo-initiator

Another material for forming the protective coating of the present invention with an index of 1.49 (thus able to provide an index gap of more than 0.1 in the case the base lens substrate 10 is made of polycarbonate) may be the composition of example 3 of patent EP0614957 which recites as follows in said patent : "80 parts of 0.1N hydrochloric acid were added dropwise to a solution containing 224 parts of GLYMO and 120 parts of DMDES. The hydrolysed solution was stirred for 24 hours at room temperature and then 718 parts of 30% colloidal silica in methanol, 15 parts of aluminium acetylacetonate and 44 parts of ethylcellosolve were added. A small amount of surfactant was added. The theoretical dry content (TDC) of the composition was in the order of 13% of solid material from the hydrolyzed DMDES."GLYMO being defined in said patent as g-Glycidoxypropyltrimethoxysilane. DMDES being defined in said patent as Dimethyldiethoxysilane. The total dry content obtained was of roughly 35% of the composition.'

The difference in refraction index between the protective layer 20 and the optical elements 30 may induce reflections at the interface between the protective layer and the surface bearing the optical elements. The optical article 1 then preferably comprises a quarter-wave layer 40 at the interface between the base lens substrate 10 and the optical elements 30, suitable for reducing the amount of reflections. A quarter wave layer (also noted as λ/4 layer) having a refraction index RI = (n_{c}.nₘ)^{1/2} may for instance be used.

A detailed example of λ/4 layer is disclosed in patent US7008690 of the applicant.

Last, in reference with figure 2b the optical article 1 can comprise one or more coating(s) on each of the front surface and back surface thereof. For instance, the front surface or second surface of the protective layer can be covered with at least one additional coating, including one or more of the following: an antireflective coating, a photochromic coating, an anti-smudge coating, an anti-fog coating, a tintable coating, a self-healing coating, an anti-rain coating, an anti-static coating, an anti-UV coating, or an anti-blue light coating.

### Manufacturing method of an optical article

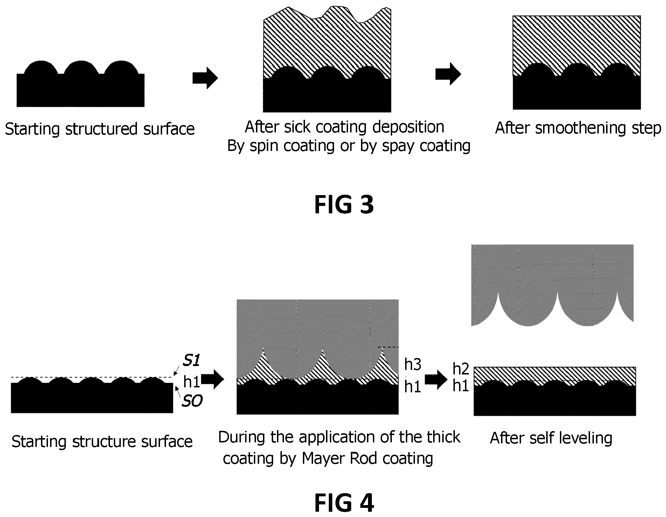

With reference to figures 3 to 6, a method for forming the optical article described above will now be disclosed.

The present invention also relates to the method of manufacturing an optical article, notably the optical article disclosed here above.

Said method of manufacturing an optical article comprises:
1) providing a base lens substrate having opposing first and second lens surfaces and comprising, on the second lens surface, at least one optical element or a plurality of optical elements having a maximum height, measured in a direction perpendicular to the second lens surface, that is less than or equal to 0.1 millimeters (mm) and a diameter that is less than or equal to 2.0 mm;
2) applying by wet deposition on the second lens surface of the base lens substrate comprising the at least one or the plurality of optical elements, a curable composition suitable for forming a protective layer having opposing first and second protective surfaces;
3) curing the curable composition for forming the protective layer;
4) optionally repeating step 2 or step 2 and step 3;

the protective layer resulting from step 3 or 4 presenting a second protective surface parallel to the second lens surface of the lens devoid of optical elements,
said protective layer encapsulating the at least one or each optical element, and
the maximum thickness of the protective layer being at least 2 times, preferably at least 5 times, for example between 2.5 to 12 times or between 2.5 to 8 times of the maximum height of the at least one or each of the optical elements and
the index n_{c} of said protective layer is lower than the index nₘ of the optical elements such that the difference nₘ - n_{c} is greater than 0.09, preferably greater than 0.10, or even greater than 0.15.

### The curable composition suitable for forming the protective layer useful for the present method

The curable composition suitable for forming the protective layer useful for the present method is the any one of the ones described above with respect to the optical article. More generally, all the characteristics described above in connection with the optical article also apply to the method of manufacturing the article or the said optical article, the said method being another object of the present invention. Conversely, all the characteristics described below in connection with the method also apply to the optical article.

Thus the curable composition suitable for forming a protective layer comprises at least:
- nanoparticles, preferably silica nanoparticles,
- and compounds selected from epoxyalkylalkoxysilanes, polyfunctional acrylate monomer, polyfunctional epoxy compound, polyfunctional acrylate monomers, urethane monomers, silane compounds and any mixture of the aforesaid compounds, and
- a catalyst such as free radical photo-initiator or one cationic photoinitiator or a mixture thereof,
- and optionally a surfactant and/ or a solvent.

The epoxyalkylalkoxysilanes useful for the present invention are preferably selected from glycidyl(C1-3 alkyl)-(C1-3 alkyl)-di(1-3 alkoxy)silanes and glycidyl(C1-3 alkyl)-tri(C1-3 alkoxy)silanes. Hydrolysis of the C1-3 alkoxy groups releases volatile alcohols (methanol, ethanol, propanol) which are easily evaporated from the curing coating composition. The (epoxy)(alkoxy)silane is advantageously 3-glycidoxypropy-methyldiethoxysilane and/or 3- glycidoxypropyl-trimethoxysilane.

The polyfunctional acrylate monomer useful for the present invention may be selected from the group consisting of diacrylate, triacrylate, tetraacrylate and hexaacrylate monomers, such as pentaerythritol triacrylate or pentaerythritol tetraacrylate. In particular, the polyfunctional monomer is preferably selected from the group consisting of 1,4-butanedioldiacrylate, 1 ,6-hexanedioldiacrylate, dipropyleneglycol diacrylate pentaerythritol triacrylate, pentaerythritol tetraacrylate, dipentaerythritol tetraacrylate, dipentaerythritol hexaacrylate, silicone hexaacrylate, and mixtures thereof. The addition of polyfunctional acrylate monomers may improve adhesion, tinting, scratch resistance and adhesion to thermoplastic substrates.

The polyfunctional epoxy compound useful for the present invention may be selected from the group consisting of diglycerol tetraglycidyl ether, dipentaerythritol tetraglycidyl ether, sorbitol polyglycidyl ether, polyglycerol polyglycidyl ether, pentaerythritol polyglycidyl ether such as pentaerythritol tetraglycidyl ether, trimethylolethane triglycidyl ether, trimethylolmethane triglycidyl ether, trimethylolpropane triglycidyl ether, triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1 ,2,6-hexanetriol triglycidyl ether, glycerol triglycidyl ether, diglycerol triglycidyl ether, glycerol ethoxylate triglycidyl ether, Castor oil triglycidyl ether, propoxylated glycerine triglycidyl ether, ethylene glycol diglycidyl ether, 1 ,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether, (3,4- epoxycyclohexane) methyl 3,4-epoxycylohexylcarboxylate and mixtures thereof. Addition of such polyepoxides improves toughness of the resulting cured coating and adhesion to thermoset resin substrates.

When poly functional acrylate monomers are used in combination with the epoxyalkoxy silane, the coating composition may further comprise at least one free radical photo-initiator, preferably from 1 % to 15 % by weight, more preferably from 1.5 to 10% by weight, relative to the polyfunctional acrylate monomers, of a free radical photoinitiator. Such free radical photo -initiators can be selected for example from haloalkylated aromatic ketones such as chloromethylbenzophenones; some benzoin ethers such as ethyl benzoin ether and isopropyl benzoin ether ; dialkoxyacetophenones such as diethoxyacetophenone and α,α-dimethoxy-a-phenylacetophenone ; hydroxyketones such as (I-[4-(2-hydroxyethoxy)-phenyl]-2-hydroxy-2- methyl-I -propan- 1-one) (Irgacure^{®} 2959 from CIBA), 1-hydroxycyclohexyl-phenyl-ketone (Irgacure^{®} 184 from CIBA) and 2-hydroxy-2-methyl-I-phenylpropan-I-one (such as Darocur^{®} 1173 sold by CIBA) ; alpha amino ketones, particularly those containing a benzoyl moiety, otherwise called alpha-amino acetophenones, for example 2-methyl 1 -[4-phenyl]-2- morpholinopropan-1 -one (Irgacure^{®} 907 from CIBA), (2-benzyl-2-dimethyl amino-1 -5 (4-morpholinophenyl)-butan- 1 -one (Irgacure^{®} 369 from CIBA); monoacyl and bisacyl phosphine oxides and sulphides, such as phenylbis(2,4,6-trimethylbenzoyl)-phosphine oxide (Irgacure^{®} 819 sold by CIBA) ; triacyl phosphine oxides ; liquid photoinitiator blends (such as GENOCURE LTM sold by Rahn USA Corp.) and mixtures thereof. Similarly, polyfunctional epoxy monomers may be used in combination with at least one cationic photoinitiator, which may be selected from triarylsulfonium salts, diaryliodonium salts or mixtures thereof, preferably triarylsulfonium salts. The triarylsulfonium or diaryliodonium salts used in the present invention advantageously have counter-ions of low nucleophilicity and are preferably selected from triarylsulfonium hexafluoroantimonate, triarylsulfonium hexafluorophosphate, diaryliodonium hexafluoroantimonate and diaryliodonium hexafluorophosphate salts. Triarylsulfonium hexafluoroantimonate is available for example from Dow Chemical Company under the trademark CYRACURE^{™} UVI-6976 (50% by weight in propylene carbonate). Triarylsulfonium hexafluorophosphate is available for example from Dow Chemical Company under the trademark CYRACURE^{™} UVI-6992 (50% by weight in propylene carbonate). Diaryliodonium hexafluorophosphate is available for example from Ciba Specialty Chemicals, under the reference IRG-250, or from Aldrich under the reference 548014. Diaryliodonium hexafluoroantimonate is available for example from Sartomer Company under the reference SarCat CD 1012. The curable composition according to the invention may comprise preferably at least 1 % by weight, preferably from 1% by weight to 15 % by weight, more preferably from 1.5 % to 10 % by weight, relative to the total dry matter of the composition, of cationic photo initiator. Cationic and/or free radical photoinitators are typically added to the alkoxysilane/acrylate composition

Alkoxysilanes useful for the present invention are preferably selected from the group consisting of dialkyl-dialkoxysilanes, alkyl-trialkoxysilanes, alkenyl-trialkoxysilanes and mixtures thereof. In a particular embodiment, the vinylalkoxysilane is vinyltrimethoxysilane. Silanes without epoxy function can be used as substitutes for epoxy alkoxysilanes, but only as partial substitute. The weight ratio of epoxy alkoxysilane over non- epoxy silane (in particular over non-epoxy alkoxy silane) is defined as silane ratio.

The curable coating composition comprises nanoparticles, silica nanoparticles. The incorporation of Si0₂ enables to increase scratch and abrasion resistance and also to control in particular to reduce the refractive index of the coating composition and of the resulting protective layer.

As specified above with respect to the optical article, the nanoparticles used for forming the curable composition suitable for forming the protective layer are typically functionalized (or surface modified) silica nanoparticles or silica nanoparticles dispersed in a solvent or a mixture thereof, for example hollow silica nanoparticles having a refractive index ranging from 1.04 to 1.4, hollow silica functionalized with a silicone coupling agent such as 3-trimethoxysilylpropylacrylate or silica nanoparticles dispersed in trimethylol propane triacrylate.

Colloidal silica particles may be added to the coating composition in an amount of up to 50 weight %, preferably from 5 to 30 weight %, relative to the total dry matter of the composition. An exemplary colloidal silica comprises 50% Si0₂ in trimethylolpropane triacrylate (TMPTA) (Nanocryl^{®} C-150).

The curable composition as disclosed herein advantageously further comprises small amounts, preferably from 0.05 to 1.5 % by weight, of at least one surfactant. The surfactant is important for good wetting of the substrate resulting in satisfactory cosmetics of the final hard-coating. Said surfactant can include for example poly(alkyleneglycol)-modified polydimethylsiloxanes or polyheptamethylsiloxanes, or fluorocarbon-modified polysiloxanes. The curable composition preferably contain from 0.1 % to 0.3 % of a fluorocarbon-modified polysiloxane, such as the commercial product EFKA ^{®} 3034 sold by Ciba Specialty Chemicals, or the commercial product FC-4434 sold by 3M or EBECRYL^{®} 1360 is a silicone hexa-acrylate material.

In some cases, for example when the coating composition contains high amounts of colloidal particles or nanoparticles, it may be necessary to use an organic solvent to control viscosity or for improving flow properties. The amount of organic solvent(s) preferably does not exceed 30 % by weight of the coating composition. The solvent is for example selected from alcohols, glycol ethers, polyols and mixtures thereof.

In a particular embodiment, the method does not comprise a hydrolysis step before the UV curing step. In some embodiments, cationic and/or free radical photoinitators are added.

For example, the curable composition suitable for forming a protective layer can comprise polyfunctional acrylate monomers such as 1,6-hexanedioldiacrylate and dipentaerythritol hexaacrylate or a mixture thereof, silane compounds such as vinylalkoxysilane, for example vinyltrimethoxysilane, polyfunctional epoxy compounds such as trimethylolpropanetriglycidyl ether, silica nanoparticles, free radical photo-initiator or one cationic photoinitiator or a mixture thereof and surfactants such as silicone hexa-acrylate material and fluorocarbon-modified polysiloxane or a mixture thereof. This composition is particularly interesting in the case of a base lens substrate and optical elements both made of polycarbonate.

Another example of curable composition suitable for forming a protective layer is a composition comprising polyfunctional acrylate monomers such as 1,6-hexanedioldiacrylate, silica nanoparticles such as hollow silica nanoparticles, for example surface modified hollow silica nanoparticles, and a catalyst such as free radical photo-initiator. This composition is also particularly interesting in the case of a base lens substrate and optical elements both made of polycarbonate.

### The deposition of the curable coating using wet deposition techniques

In the method of the present invention, the curable composition suitable for forming a protective layer is applied on the at least one or a plurality of optical elements to be coated by wet deposition techniques.

In particular the curable composition is applied by a step of spin coating, a step of spray coating a step of rod coating or a step of inkjet coating, preferably a step of inkjet coating, in such a way that the final cured coating, the protective layer presents a smooth surface parallel to the surface of the base lens substrate without the optical elements or microstructures. The second protective layer of the protective layer does not replicate the height change present at the first protective surface.

With a step of spin coating, a large amount of coating is deposited on the whole surface of the lens, the lens is spun to set the thickness at the target value.

With a step of spin coating or spray coating, the coating might exhibit a non smooth surface due either to the tendency to replicate the substrate structured surface (spin coating, curtain coating,...) or due to the deposition technique itself (spray coating) (Figure 3). In such embodiment, in order to make sure to obtain a protective layer with a smooth surface (a smooth second protective surface) a subsequent heating step at low temperature of the applied curable coating can be carried out after the deposition of a thick layer of composition (i.e between steps 3 and 4 of the method object of the present invention). Such low temperature heating step at a temperature lower the boiling temperature of the main solvent/monomer enables to decrease the viscosity of the curable composition.

Alternatively in order to make sure to obtain a protective layer with a smooth surface, a leveling agent can be added to the curable coating composition to even out the surface tension of the wet coating composition.

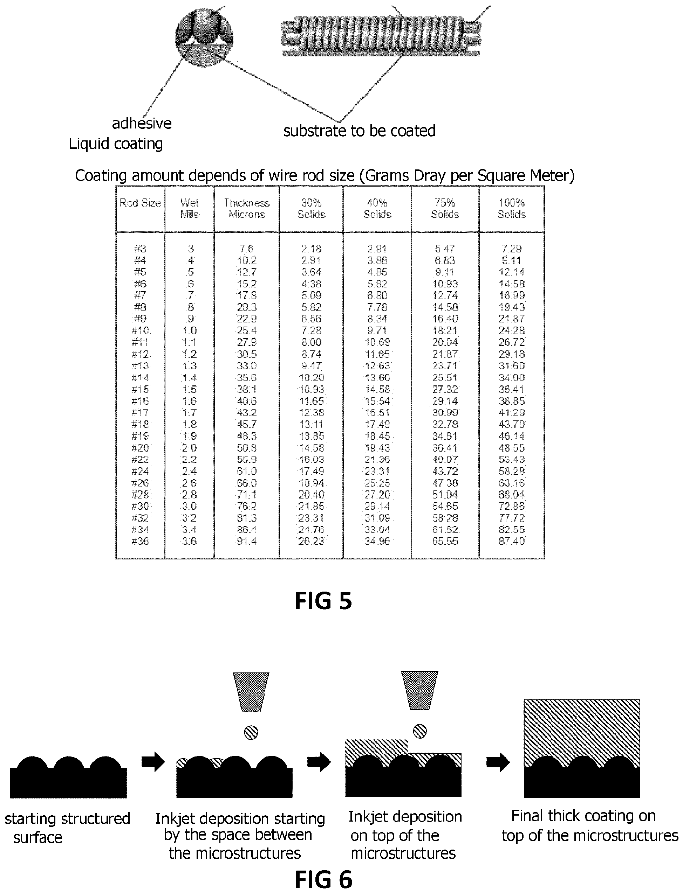

The curable coating can be applied using a Mayer rod (or wire-wound rod) coating approach. Large amount of coating is deposited on the lens, the Mayer rod (built with a flexible core) is rolled across the surface of the lens. The Rod number is between #6 and #15, depending on the solid content, in order to obtain a hard coat thickness higher than 5 microns and preferentially higher than 10 microns. (Figure 5)

The advantage of the Mayer rod (or wire-wound rod) coating approach is that it fills the space between the optical elements or microstructures and applies a coating thickness on top of the surface S1. The surface S1 is parallel to the uniform surface of the lens S0 (i.e the second lens surface) (without optical elements), defined by the highest points of the optical elements, at a distance h1 from S0. The distance h1 represents the height of the optical elements. The distance h3 is the highest distance filled by the liquid curable coating between the wound wires on the Mayer rod. The distance h3 is defined by the geometry of the Mayer rod, and in the case of a wire wound rod, is defined by the diameter of the wire wound around the rod. The thickness h2 is defined by h3 after leveling. The final thickness of the coating will depend on h2 and the solid content (as illustrated in the Figure 4). In this embodiment the rod used to apply the coating has its axis parallel or almost parallel to the surface S1. For a very flat base (for instance Semi finished lenses used for high myopic prescriptions) a rigid typical metal rod can be used. However, preferentially, the rod has enough flexibility to follow the curvature defined by S1.

The curable composition can also be applied using inkjet coating technique. In such embodiment, the deposition of the curable coating is carried out in a pattern which is the complementary pattern of the height microstructure. Typically the step of wet deposition comprises as illustrated in Figure 6:
- A first step or first pass depositing a limited or measured quantity of the curable coating composition at the bottom only of the optical elements (only partially covering the microstructures) resulting in a first layer
- A second step or second pass depositing another limited quantity of the curable coating composition on top of the 1st layer in order to cover more, fully cover, the optical elements, then
- An additional pass or several additional passes until the relevant thickness is reached, typically until the maximum thickness or height of the curable coating composition, measured in a direction perpendicular to the second base lens substrate is greater than 2 times, preferably greater than 5 times of the maximum height of the optical elements.

Still in this embodiment the step of wet deposition comprises varying the amount of the curable composition suitable for forming a protective layer depending on the local presence or absence of the at least one optical element. Such control is possible via a method implemented by a computer such as the one disclosed in EP EP19306294.0.

### Optical elements:

All the characteristics described below in connection with the optical articles also apply to the method, in particular with respect to the manufacturing of the lens substrate bearing microstructures.

According to a first embodiment the base lens substrate and the at least one or the plurality of optical elements are formed in a single step, preferably by injection molding or casting. In a second embodiment, the plurality of optical elements can be made by a surfacing step of the second lens surface or by a deposition material step on the second lens surface, preferably by molding or ink jet. The first embodiment is preferred.

In embodiments, the method for manufacturing the optical article may further comprise additional steps such as depositing at least one additional coating on the abrasion-resistant coating, and possibly and the main surface of the base-lens substrate 10 that is devoid of optical elements (microlenses), said additional coating comprising an antireflective coating, a photochromic coating, an anti-smudge coating, an anti-fog coating, a tintable coating, a self-healing coating, an anti-rain coating, an anti-static coating, an anti-UV coating, or an anti-blue light coating. The main surface of the base-lens substrate devoid of micro-lens may also be coated with an abrasion-resistant coating.

If the base-lens substrate 10 is or comprise a semi-finished lens, the method may further comprise finishing steps including surfacing the semi-finished lens to obtained the desired target power, and/or trimming the obtained lens.

### EXAMPLES:

### Example 1:

The lens with microlenses is made of polycarbonate (PC) Lexan OQ3820^{®}, sold by Sabic and has a refractive index of 1.586.

The hard coat has a refractive index of 1.47 and is nano-composite photo-curable hard coat containing acrylic monomers and silica nanoparticles.

### Curable coating composition:

The vinyltrimethoxysilane (32.1g) is added to the trimethylolpropanetriglycidyl ether (20.1g), 1,6-hexanedioldiacrylate (8.3g) and dipentaerythritol hexaacrylate (20.8g) in bottle opaque for UV.

This mixture is stirred until homogenous. Next, the UVI-6976 (Triarylsulfonium hexafluorantimonate, 0.8g)), the UVI-6992 (Triarylsulfonium hexafluorophosphate, 0.3g), Darocur 1173 (2-hydroxy-2-methylpropiophenone, 1.6g), and Irgacure 819 (Phenylbis 2,4,6-trimethylbenoyl)phosphine oxide, 0.4g) are added along with the surfactants, EBECRYL1360 (0.8g) and FC4434 (0.6g). The mixture is again mixed until homogenous. The Nanocryl C-150 (50% nanosilica dispersed in trimethylol propane triacrylate - TMPTA, 10.3g) is added last and the coating is allowed to mix overnight prior to filtering.

After deposition the curable coating composition by one of the processes described in the previous embodiments on the lens comprising microstructures, the curable coating composition is heated at 50°C for 10 mn (when smoothening is needed), and then UV cured for between 5s and 10s under H+ bulb (depending on the thickness).

The refractive index of the resulting coating after UV curing is ~1.47 (at 633 nm).

### Example 2:

The lens with microlenses is made of polycarbonate (PC) Lexan OQ3820^{®}, sold by Sabic and has a refractive index of 1.586.

The hard coat has a refractive index of about 1.40 and is a nano-composite photo-curable hard coat containing acrylic monomers and hollow silica nanoparticles, such as Thrulya (colloidal hollow silica nanoparticles produced by JGC C&C).

### Curable coating composition:

In order to allow high concentrations of hollow silica nanoparticles to be dispersed in UV-curable monomers, the coupling agent 3-trimethoxysilylpropylacrylate was used to modify the surface of the inorganic nanoparticles.

Hollow silica nanoparticles with an average particle diameter of 45 nm (from JGC) were dispersed in water. The silane coupling agent was added to the dispersion, the mixture was heated for 4h under reflux. The surface-modified nanoparticles were then dispersed in 1-methoxy-2-propanol (by centrifugation).

The surface modified hollow silica nanoparticles dispersed in 1-methoxy-2-propanol were mixed with the UV-curable monomer 1,6-hexanediol diacrylate.

The photoinitiator Irgacure^{®} 907 was added at 5%wt (the monomer representing 95%wt).

After deposition the curable coating composition by one of the processes described in the previous embodiments on the lens comprising microstructures, the curable coating composition is heated at 80°C for 2 min, and then UV cured for 10 s to 30 s (depending on the thickness).

The modified hollow silica nanoparticles represent 60%wt in the final coating. The refractive index of the coating (at 633nm) is 1.38.

### Example 3:

The formulation is similar to the one in example 2, but the surface modified hollow silica nanoparticles represent 40% wt in the final coating. The refractive index (at 633nm) is 1.43.

## Claims

1. An optical article comprising:
- a base lens substrate having opposing first and second lens surfaces;
a protective layer having opposing first and second protective surfaces and a maximum thickness, measured in a direction perpendicular to the first protective surface between the first and second protective surfaces, the first protective surface disposed on the second lens surface; and
at least one or a plurality of optical elements, each:
defining a portion of one of the first protective surface and the second lens surface; having a maximum height, measured in a direction perpendicular to the second lens surface carrying them, that is less than or equal to 0.1 millimeters (mm) and a diameter that is less than or equal to 2.0 mm.
wherein
the protective layer is composed of a crosslinked matrix and nanoparticles and
the index n_{c} of said protective layer is lower than the index nₘ of the at least one or each optical element such that the difference nₘ - n_{c} is greater than 0.09, preferably greater than 0.10, or even greater than 0.15;
and
wherein
the maximum thickness of the protective layer is at least 2 times, preferably at least 5 times of the maximum height of the at least one or each optical element.

2. The optical article of claim 1 wherein:
the at least one or each optical element is chosen among the group consisting of microlens, Fresnel structure, diffractive structure such as microlenses defining each a Fresnel structure, permanent technical bump and phase-shifting element, preferably is a microlense.

3. The optical article of claim 1 or 2, wherein:
the at least one or each optical element has a maximum height, measured in a direction perpendicular to the second lens surface, that comprised between 2 and 20 micrometers (µm) and a diameter that is comprised between 0.8 and 2.0 millimeters (mm).

4. The optical article of any one of claims 1 to 3, wherein:
the crosslinked matrix is made of acrylic compounds, epoxy compounds, epoxy acrylic compounds, silane compounds, epoxysilane compounds, polyurethane acrylic compounds, siloxane compounds and any mixture of the aforesaid compounds.

5. The optical article of any one of claims 1 to 4, wherein: the nanoparticles are chosen from silica nanoparticles having a refractive index ranging from 1.04 to 1.5, for example hollow silica nanoparticles having a refractive index ranging from 1.04 to 1.4, functionalized or surface modified silica nanoparticles, functionalized or surface modified hollow nanoparticles and a mixture thereof.

6. The optical article of any one claims 1 to 5 wherein:
the base lens substrate and the optical elements are both made in a thermoplastic or thermosetting plastic selected from, for instance: polycarbonate, of polyamide, of polyimide, of polysulfone, of copolymers of poly(ethylene terephthalate) and polycarbonate, of polyolefins, in particular of polynorbornene, of homopolymers and copolymers of diethylene glycol bis(allyl carbonate), of (meth)acrylic polymers and copolymers, in particular (meth)acrylic polymers and copolymers derived from bisphenol A, of thio(meth)acrylic polymers and copolymers, of polyurethane and polythiourethane homopolymers or copolymers, epoxy polymers and copolymers and episulfide polymers and copolymers, preferably made of polycarbonate, diethylene glycol bis(allylcarbonate) polymer, or of a thermosetting polythiourethane resin having a refractive index of 1.60 or a thermosetting polythiourethane resin having a refractive index of 1.67.

7. The optical article of any one of claims 1 to 6, wherein
the base-lens substrate is a semi-finished lens.

8. A method of manufacturing an optical article, the method comprising:
1) providing a base lens substrate having opposing first and second lens surfaces and comprising, on the second lens surface, at least one or a plurality of optical elements having a maximum height, measured in a direction perpendicular to the second lens surface, that is less than or equal to 0.1 millimeters (mm) and a diameter that is less than or equal to 2.0 mm;
2) applying by wet deposition on the second lens surface of the base lens substrate comprising the at least one or the plurality of optical elements, a curable composition suitable for forming a protective layer having opposing first and second protective surfaces;
3) curing the curable composition for forming the protective layer;
4) optionally repeating step 2 or step 2 and step 3;
the protective layer resulting from step 3 or 4 presenting a second protective surface parallel to the second lens surface of the lens devoid of optical elements,
said protective layer encapsulating the at least one or each optical element, and
the maximum thickness of the protective layer being at least 2 times, preferably at least 5 times of the maximum height of the at least one or each optical element and the index n_{c} of said protective layer being lower than the index nₘ of the at least one or each optical element such that the difference nₘ - n_{c} is greater than 0.09, preferably greater than 0.10, or even greater than 0.15.

9. The method of claim 8, wherein
the step of wet deposition is a step of spin coating, a step of spray coating, a step of rod coating or a step of inkjet coating, preferably a step of inkjet coating.

10. The method of claim 8 or 9, wherein
The step of wet deposition is a step of inkjet coating, said step comprising:
- A first step or first pass depositing a limited or measured quantity of the curable coating composition at the bottom only of the at least one or the plurality of optical elements (only partially covering the microstructures) resulting in a first layer
- A second step or second pass depositing another limited quantity of the curable coating composition on top of the first layer in order to cover more the at least one or each of the optical elements, then
- An additional pass or several additional passes until the maximum thickness or height of the curable coating composition, measured in a direction perpendicular to the second base lens substrate is greater than 2 times, preferably greater than 5 times of the maximum height of the at least one or each of the optical elements.

11. The method of anyone of claims 8 to 10, wherein
- the curable composition suitable for forming a protective layer comprises at least: nanoparticles, preferably silica nanoparticles,
- and compounds selected from acrylic monomers, epoxy monomers, epoxy acrylic compounds, silane compounds, epoxysilane compounds, polyurethane acrylic compounds, siloxane compounds and any mixture of the aforesaid compounds, and
- a catalyst such as free radical photo-initiator or one cationic photoinitiator or a mixture thereof,
- and optionally a surfactant and/ or a solvent.

12. The method of any one of claims 8 to 11, wherein
the nanoparticles used for forming the curable composition suitable for forming the protective layer are functionalized (or surface modified) silica nanoparticles or silica nanoparticles dispersed in a solvent or a mixture thereof, for example hollow silica nanoparticles having a refractive index ranging from 1.04 to 1.4, hollow silica functionalized with a silicone coupling agent such as 3-trimethoxysilylpropylacrylate or silica nanoparticles dispersed in trimethylol propane triacrylate.

13. The method of any one of claims 8 to 12, wherein
the curable composition suitable for forming a protective layer comprises polyfunctional acrylate monomers such as 1,6-hexanedioldiacrylate and dipentaerythritol hexaacrylate or a mixture thereof, silane compounds such as vinylalkoxysilane, for example vinyltrimethoxysilane, polyfunctional epoxy compounds such as trimethylolpropanetriglycidyl ether, silica nanoparticles, free radical photo-initiator or one cationic photoinitiator or a mixture thereof and surfactants such as silicone hexa-acrylate material and fluorocarbon-modified polysiloxane or a mixture thereof.

14. The method of any one of claims 8 to 13, wherein
the curable composition suitable for forming a protective layer comprises polyfunctional acrylate monomers such as 1,6-hexanedioldiacrylate, silica nanoparticles such as hollow silica nanoparticles, for example surface modified hollow silica nanoparticles, and a catalyst such as free radical photo-initiator.

15. The method of any one of claims 8 to 15, wherein
the base lens substrate and the at least one or the plurality of optical elements are formed in a single step, preferably by injection molding or casting.

## Patentansprüche

1. Optischer Artikel, umfassend:
- ein Basislinsensubstrats mit gegenüber liegenden ersten und zweiten Linsenoberflächen;
eine schützende Schicht mit gegenüber liegenden ersten und zweiten schützenden Oberflächen und einer Maximaldicke, gemessen in einer Richtung senkrecht zu der ersten schützenden Oberfläche zwischen der ersten und der zweiten schützenden Oberfläche, wobei die erste schützende Oberfläche auf der zweiten Linsenoberfläche angeordnet ist; und
mindestens eines oder eine Vielzahl von optischen Elementen, die jeweils:
einen Abschnitt von einer von der ersten schützenden Oberfläche und der zweiten Linsenoberfläche definiert;
eine Maximalhöhe, gemessen in einer Richtung senkrecht zu der zweiten Linsenoberfläche, die sie trägt, die kleiner als oder gleich 0,1 Millimeter (mm) ist, und einen Durchmesser aufweist, der kleiner als oder gleich 2,0 mm ist,
wobei
die schützende Schicht aus einer vernetzten Matrix und Nanopartikeln zusammengesetzt ist, und der Index n_{c} der schützenden Schicht niedriger als der Index nₘ des mindestens einen oder jeden optischen Elements ist, so dass die Differenz nₘ - n_{c} größer als 0,09, vorzugsweise größer als 0,10 oder sogar größer als 0,15 ist; und
wobei die Maximaldicke der schützenden Schicht mindestens das 2-fache, vorzugsweise mindestens das 5-fache der Maximalhöhe von dem mindestens einen oder jedem optischen Element ist.

2. Optischer Artikel nach Anspruch 1, wobei:
das mindestens eine oder jedes optische Element ausgewählt ist aus der Gruppe bestehend aus einer Mikrolinse, einer Fresnel-Struktur, einer diffraktiven Struktur, wie Mikrolinsen, die jeweils eine Fresnel-Struktur definieren, einer permanenten technischen Unebenheit und einem Phasenverschiebungselement, und vorzugsweise eine Mikrolinse ist.

3. Optischer Artikel nach Anspruch 1 oder 2, wobei:
das mindestens eine oder jedes optische Element eine Maximalhöhe, gemessen in einer Richtung senkrecht zu der zweiten Linsenoberfläche, die zwischen 2 und 20 Mikrometern (µm) liegt, und einen Durchmesser aufweist, der zwischen 0,8 und 2,0 Millimetern (mm) liegt.

4. Optischer Artikel nach einem der Ansprüche 1 bis 3, wobei:
die vernetzte Matrix aus Acrylverbindungen, Epoxyverbindungen, Epoxyacrylverbindungen, Silanverbindungen, Epoxysilanverbindungen, Polyurethan-Acrylverbindungen, Siloxanverbindungen und beliebiger Mischung der genannten Verbindungen gefertigt ist.

5. Optischer Artikel nach einem der Ansprüche 1 bis 4, wobei:
die Nanopartikel ausgewählt sind aus Siliciumdioxidnanopartikeln mit einem Brechungsindex im Bereich von 1,04 bis 1,5, beispielsweise hohlen Siliciumdioxidnanopartikeln mit einem Brechungsindex im Bereich von 1,04 bis 1,4, funktionalisierten oder oberflächenmodifizierten Siliciumdioxidnanopartikeln, funktionalisierten oder oberflächenmodifizierten hohlen Nanopartikeln und einer Mischung davon.

6. Optischer Artikel nach einem der Ansprüche 1 bis 5, wobei:
sowohl das Basislinsensubstrat als auch die optischen Elemente aus einem thermoplastischen oder duroplastischen Kunststoff gefertigt sind, der beispielsweise ausgewählt ist aus: Polycarbonat, Polyamid, Polyimid, Polysulfon, Copolymeren von Po-ly(ethylenterephthalat) und Polycarbonat, Polyolefinen, insbesondere Polynorbornen, Homopolymeren und Copolymeren von Diethylenglykolbis(allylcarbonat), (Meth)acrylpolymeren und -copolymeren, insbesondere (Meth)acrylpolymeren und -copolymeren, die von Bisphenol A abgeleitet sind, Thio(meth)acrylpolymeren und -copolymeren, Polyurethan- und Polythiourethanhomopolymeren oder -copolymeren, Epoxypolymeren und - copolymeren und Episulfidpolymeren und -copolymeren, vorzugsweise gefertigt aus Polycarbonat, Diethylenglykolbis(allylcarbonat)polymer, oder aus einem duroplastischen Polythiourethanharz mit einem Brechungsindex von 1,60 oder einem duroplastischen Polythiourethanharz mit einem Brechungsindex von 1,67.

7. Optischer Artikel nach einem der Ansprüche 1 bis 6, wobei das Basislinsensubstrat eine halbfertige Linse ist.

8. Verfahren zum Fertigen eines optischen Artikels, wobei das Verfahren umfasst:
1) Bereitstellen eines Basislinsensubstrat mit gegenüber liegenden ersten und zweiten Linsenoberflächen, und das auf der zweiten Linsenoberfläche mindestens eines oder eine Vielzahl von optischen Elementen mit einer Maximalhöhe, die in einer Richtung senkrecht zu der zweiten Linsenoberfläche gemessen wird, die kleiner als oder gleich 0,1 Millimetern (mm) ist und einem Durchmesser umfasst, der kleiner als oder gleich 2,0 mm ist;
2) Aufbringen einer härtbaren Zusammensetzung, die zum Bilden einer schützenden Schicht mit gegenüber liegenden ersten und zweiten schützenden Oberflächen geeignet ist, durch Nassabscheidung auf der zweiten Linsenoberfläche des Basislinsensubstrats, die mindestens ein oder eine Vielzahl von optischen Elementen umfasst;
3) Härten der härtbaren Zusammensetzung zur Bildung der schützenden Schicht;
4) gegebenenfalls Wiederholen von Schritt 2 oder Schritt 2 und Schritt 3;
wobei die schützende Schicht, die aus Schritt 3 oder 4 resultiert, eine zweite schützende Oberfläche parallel zu der zweiten Linsenoberfläche der Linse präsentiert, die frei von optischen Elementen ist,
wobei die schützende Schicht das mindestens eine oder jedes optische Element verkapselt, und
wobei die Maximaldicke der schützenden Schicht mindestens das 2-fache, vorzugsweise mindestens das 5-fache der Maximalhöhe des mindestens einen oder jeden optischen Elements ist, und der Index n_{c} der schützenden Schicht niedriger als der Index nₘ von dem mindestens einen oder jedem optischen Element ist, so dass die Differenz nₘ - n_{c} größer als 0,09, vorzugsweise größer als 0,10 oder sogar größer als 0,15 ist.

9. Verfahren nach Anspruch 8, wobei
der Schritt der Nassabscheidung ein Schritt des Rotationsbeschichtens, ein Schritt des Sprühbeschichtens, ein Schritt des Stabbeschichtens oder ein Schritt des Tintenstrahlbeschichtens ist, vorzugsweise ein Schritt des Tintenstrahlbeschichtens.

10. Verfahren nach Anspruch 8 oder 9, wobei
der Schritt der Nassabscheidung ein Schritt des Tintenstrahlbeschichtens ist, wobei der Schritt umfasst:
- einen ersten Schritt oder ersten Durchgang, worin eine begrenzte oder abgemessene Menge der härtbaren Beschichtungszusammensetzung nur am Boden von dem mindestens einen oder der Vielzahl der optischen Elemente (wobei die Mikrostrukturen nur teilweise bedeckt werden) abgeschieden wird, was zu einer ersten Schicht führt,
- einen zweiten Schritt oder zweiten Durchgang, worin eine andere begrenzte Menge der härtbaren Beschichtungszusammensetzung auf der ersten Schicht abgeschieden wird, um das mindestens eine oder jedes der optischen Elemente mehr zu bedecken, dann
- einen zusätzlichen Durchgang oder mehrere zusätzliche Durchgänge, bis die Maximaldicke oder Maximalhöhe der härtbaren Beschichtungszusammensetzung, gemessen in einer Richtung senkrecht zu dem zweiten Basislinsensubstrat, größer als das 2-fache, vorzugsweise größer als das 5-fache der Maximalhöhe des mindestens einen oder jeden der optischen Elemente ist.

11. Verfahren nach einem der Ansprüche 8 bis 10, wobei
- die härtbare Zusammensetzung, die zum Bilden einer schützenden Schicht geeignet ist, mindestens umfasst: Nanopartikel, vorzugsweise Siliciumdioxidnanopartikel,
- und Verbindungen ausgewählt aus Acrylmonomeren, Epoxymonomeren, Epoxyacrylverbindungen, Silanverbindungen, Epoxysilanverbindungen, Polyurethan-Acrylverbindungen, Siloxanverbindungen und beliebiger Mischung der genannten Verbindungen, und
- einen Katalysator, wie freiradikalischen Photoinitiator oder einen kationischen Photoinitiator oder eine Mischung davon,
- und gegebenenfalls ein Tensid und/oder ein Lösungsmittel.

12. Verfahren nach einem der Ansprüche 8 bis 11, wobei die Nanopartikel, die zum Bilden der härtbaren Zusammensetzung verwendet werden, die zum Bilden der schützenden Schicht geeignet ist, funktionalisierte (oder oberflächenmodifizierte) Siliciumdioxidnanopartikel oder Siliciumdioxidnanopartikel, die in einem Lösungsmittel dispergiert sind, oder eine Mischung davon sind, beispielsweise hohle Siliciumdioxidnanopartikel mit einem Brechungsindex im Bereich von 1,04 bis 1,4, hohles Siliciumdioxid, funktionalisiert mit einem Silikon-Kopplungsmittel, wie 3-Trimethoxysilylpropylacrylat, oder Siliciumdioxidnanopartikel, die in Trimethylolpropantriacrylat dispergiert sind.

13. Verfahren nach einem der Ansprüche 8 bis 12, wobei die härtbare Zusammensetzung, die zur Bildung einer schützenden Schicht geeignet ist, polyfunktionelle Acrylatmonomere, wie 1,6-Hexandioldiacrylat und Dipentaerythritolhexaacrylat oder eine Mischung davon, Silanverbindungen, wie Vinylalkoxysilan, beispielsweise Vinyltrimethoxysilan, polyfunktionelle Epoxyverbindungen, wie Trimethylolpropantriglycidylether, Siliciumdioxidnanopartikel, freiradikalischen Photoinitiator oder einen kationischen Photoinitiator oder eine Mischung davon, und Tenside, wie Silikonhexaacrylatmaterial und fluorkohlenstoffmodifiziertes Polysiloxan oder eine Mischung davon, umfasst.

14. Verfahren nach einem der Ansprüche 8 bis 13, wobei die härtbare Zusammensetzung, die zur Bildung einer schützenden Schicht geeignet ist, polyfunktionelle Acrylatmonomere, wie 1,6-Hexandioldiacrylat, Siliciumdioxidnanopartikel, wie hohle Siliciumdioxidnanopartikel, beispielsweise oberflächenmodifizierte hohle Siliciumdioxidnanopartikel, und einen Katalysator umfasst, wie freiradikalischen Photoinitiator.

15. Verfahren nach einem der Ansprüche 8 bis 15, wobei das Basislinsensubstrat und das mindestens eine oder die Vielzahl von optischen Elementen in einem einzigen Schritt gebildet werden, vorzugsweise durch Spritzguss oder Gießen.

## Revendications

1. Article optique comprenant :
un substrat de lentille de base ayant des première et deuxième surfaces de lentille opposées ;
une couche protectrice ayant des première et deuxième surfaces protectrices opposées et une épaisseur maximale, mesurée dans une direction perpendiculaire à la première surface protectrice entre les première et deuxième surfaces protectrices, la première surface protectrice étant disposée sur la deuxième surface de lentille ; et
au moins un ou une pluralité d'éléments optiques, chacun :
définissant une partie d'une parmi la première surface protectrice et la deuxième surface protectrice ;
ayant une hauteur maximale, mesurée dans une direction perpendiculaire à la deuxième surface de lentille qui les porte, qui est inférieure ou égale à 0,1 millimètre (mm) et un diamètre qui est inférieur ou égal à 2,0 mm,
dans lequel
la couche protectrice est composée d'une matrice réticulée et de nanoparticules et l'indice n_{c} de ladite couche protectrice est inférieur à l'indice nₘ de l'au moins un ou de chaque élément optique de sorte que la différence nₘ - n_{c} est supérieure à 0,09, préférablement supérieure à 0,10, ou même supérieure à 0,15 ;
et
dans lequel
l'épaisseur maximale de la couche protectrice est au moins 2 fois, préférablement au moins 5 fois la hauteur maximale de l'au moins un ou de chaque élément optique.

2. Article optique selon la revendication 1, dans lequel : l'au moins un ou chaque élément optique est choisi dans le groupe constitué par des microlentilles, une structure de Fresnel, une structure de diffraction telle que des microlentilles définissant chacune une structure de Fresnel, une bosse technique permanente et un élément de déplacement de phase, préférablement est une microlentille.

3. Article optique selon la revendication 1 ou 2, dans lequel : l'au moins un ou chaque élément optique a une hauteur maximale, mesurée dans une direction perpendiculaire à la deuxième surface de lentille, qui est comprise entre 2 et 20 micromètres (µm) et un diamètre qui est compris entre 0,8 et 2,0 millimètres (mm).

4. Article optique selon l'une quelconque des revendications 1 à 3, dans lequel : la matrice réticulée est composée de composés acryliques, de composés d'époxy, de composés d'époxy acryliques, de composés de silane, de composés d'époxysilane, de composés de polyuréthane acryliques, de composés de siloxane et un quelconque mélange des composés mentionnés précédemment.

5. Article optique selon l'une quelconque des revendications 1 à 4, dans lequel : les nanoparticules sont choisies parmi des nanoparticules de silice ayant un indice de réfraction dans la plage de 1,04 à 1,5, par exemple des nanoparticules de silice creuses ayant un indice de réfraction dans la plage de 1,04 à 1,4, des nanoparticules de silice fonctionnalisées ou modifiées en surface, des nanoparticules creuses fonctionnalisées ou modifiées en surface et un mélange correspondant.

6. Article optique selon l'une quelconque des revendications 1 à 5, dans lequel : le substrat de lentille de base et les éléments optiques sont tous deux faits dans une matière plastique thermoplastique ou thermodurcissable choisie parmi, par exemple : polycarbonate, de polyamide, de polyimide, de polysulfone, de copolymères de poly(téréphtalate d'éthylène) et de polycarbonate, de polyoléfines, en particulier de polynorbornène, d'homopolymères et de copolymères bis(carbonate d'allyle) de diéthylèneglycol, de polymères et de copolymères (méth)acryliques, en particulier de polymères et de copolymères (méth)acryliques dérivés du bisphénol A, de polymères et de copolymères thio(méth)acryliques, d'homopolymères ou de copolymères de polyuréthane et de polythiouréthane, de polymères et de copolymères d'époxy et de polymères et de copolymères d'épisulfure, de préférence faits de polycarbonate, de polymère bis(carbonate d'allyle) de diéthylène glycol, ou d'une résine de polythiouréthane thermodurcissable ayant un indice de réfraction de 1,60 ou d'une résine de polythiouréthane thermodurcissable ayant un indice de réfraction de 1,67.

7. Article optique selon l'une quelconque des revendications 1 à 6, dans lequel : le substrat de lentille de base est une lentille semi-finie.

8. Procédé de fabrication d'un article optique, le procédé comprenant :
1) la fourniture d'un substrat de lentille de base ayant des première et deuxième surfaces de lentille opposées et comprenant, sur la deuxième surface de lentille, au moins un ou une pluralité d'éléments optiques ayant une hauteur maximale, mesurée dans une direction perpendiculaire à la deuxième surface de lentille, qui est inférieure ou égale à 0,1 millimètre (mm) et un diamètre qui est inférieur ou égal à 2,0 mm ;
2) l'application par dépôt humide sur la deuxième surface de lentille du substrat de lentille de base comprenant l'au moins un ou la pluralité d'éléments optiques, d'une composition durcissable appropriée pour former une couche protectrice ayant des première et deuxième surfaces protectrices opposées ;
3) le durcissement de la composition durcissable pour former la couche protectrice ;
4) éventuellement la répétition de l'étape 2 ou de l'étape 2 et de l'étape 3 ;
la couche protectrice résultant de l'étape 3 ou 4 présentant une deuxième surface protectrice parallèle à la deuxième surface de lentille de la lentille dépourvue d'éléments optiques,
ladite couche protectrice encapsulant l'au moins un ou chaque élément optique, et
l'épaisseur maximale de la couche protectrice étant au moins 2 fois, préférablement au moins 5 fois la hauteur maximale de l'au moins un ou de chaque élément optique et l'indice n_{c} de ladite couche protectrice étant inférieur à l'indice nₘ de l'au moins un ou de chaque élément optique de sorte que la différence nₘ - n_{c} est supérieure à 0,09, préférablement supérieure à 0,10, ou même supérieure à 0,15.

9. Procédé selon la revendication 8, dans lequel l'étape de dépôt humide est une étape de revêtement par centrifugation, une étape de revêtement par pulvérisation, une étape de revêtement à la tige ou une étape de revêtement par jet d'encre, préférablement une étape de revêtement par jet d'encre.

10. Procédé selon la revendication 8 ou 9, dans lequel l'étape de dépôt humide est une étape de revêtement par jet d'encre, ladite étape comprenant :
- une première étape ou un premier passage déposant une quantité limitée ou mesurée de la composition de revêtement durcissable au fond seulement de l'au moins un ou de la pluralité d'éléments optiques (recouvrant seulement partiellement les microstructures) résultant en une première couche
- une deuxième étape ou un deuxième passage déposant une autre quantité limitée de la composition de revêtement durcissable au-dessus de la première couche afin de recouvrir plus de l'au moins un ou de chacun des éléments optiques, puis
- un passage supplémentaire ou plusieurs passages supplémentaires jusqu'à ce que l'épaisseur ou la hauteur maximale de la composition de revêtement durcissable, mesurée dans une direction perpendiculaire au deuxième substrat de lentille de base, soit supérieure à 2 fois, préférablement supérieure à 5 fois la hauteur maximale de l'au moins un ou de chacun des éléments optiques.

11. Procédé selon l'une quelconque des revendications 8 à 10, dans lequel
- la composition durcissable appropriée pour former une couche protectrice comprend au moins : des nanoparticules, préférablement des nanoparticules de silice,
- et des composés choisis parmi des monomères acryliques, des monomères d'époxy, des composés d'époxy acryliques, des composés de silane, des composés d'époxysilane, des composés de polyuréthane acryliques, des composés de siloxane et un quelconque mélange des composés mentionnés précédemment, et
- un catalyseur tel qu'un photoinitiateur de radicaux libres ou un photoinitiateur cationique ou un mélange correspondant,
- et éventuellement un tensioactif et/ou un solvant.

12. Procédé selon l'une quelconque des revendications 8 à 11, dans lequel les nanoparticules utilisées pour la formation de la composition durcissable appropriée pour former la couche protectrice sont des nanoparticules de silice fonctionnalisées (ou modifiées en surface) ou des nanoparticules de silice dispersées dans un solvant ou un mélange correspondant, par exemple des nanoparticules de silice creuses ayant un indice de réfraction dans la plage de 1,04 à 1,4, une silice creuse fonctionnalisée par un agent de couplage de silicone tel que l'acrylate de 3-triméthoxysilylpropyle ou des nanoparticules de silice dispersées dans du triacrylate de triméthylolpropane.

13. Procédé selon l'une quelconque des revendications 8 à 12, dans lequel la composition durcissable appropriée pour la formation d'une couche protectrice comprend des monomères d'acrylate polyfonctionnels tels que le diacrylate de 1,6-hexanediol et l'hexaacrylate de dipentaérythritol ou un mélange correspondant, des composés de silane tels vinylalcoxysilane, par exemple le vinyltriméthoxysilane, des composés d'époxy polyfonctionnels tels qu'un éther de triméthylolpropanetriglycidyle, des nanoparticules de silice, un photoinitiateur de radicaux libres ou un photoinitiateur cationique ou un mélange correspondant et des tensioactifs tels qu'un matériau d'hexaacrylate de silicone et un polysiloxane modifié par un fluorocarbure ou un mélange correspondant.

14. Procédé selon l'une quelconque des revendications 8 à 13, dans lequel la composition durcissable appropriée pour la formation d'une couche protectrice comprend des monomères d'acrylate polyfonctionnels tels que le diacrylate de 1,6-hexanediol, des nanoparticules de silice telles que des nanoparticules de silice creuses, par exemple des nanoparticules de silice creuses modifiées en surface, et un catalyseur tel qu'un photoinitiateur de radicaux libres.

15. Procédé selon l'une quelconque des revendications 8 à 15, dans lequel le substrat de lentille de base et l'au moins un ou la pluralité d'éléments optiques sont formés en une seule étape, préférablement par moulage par injection ou coulée.
